(19) Europäisches Patentamt
European Patent Office
Office européen des brevets

(11) **EP 4 539 181 A1**

(12) **EUROPEAN PATENT APPLICATION**

(43) Date of publication:
**16.04.2025 Bulletin 2025/16**

(21) Application number: **24206123.2**

(22) Date of filing: **11.10.2024**

(51) International Patent Classification (IPC):
*H01M 10/04* (2006.01)    *H01M 50/414* (2021.01)
*H01M 50/449* (2021.01)    *H01M 50/457* (2021.01)
*H01M 50/46* (2021.01)    *H01M 50/42* (2021.01)

(52) Cooperative Patent Classification (CPC):
**H01M 50/414; H01M 10/0431; H01M 50/42;
H01M 50/449; H01M 50/457; H01M 50/461;**
H01M 50/105; H01M 50/451

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.10.2023 CN 202311311912**

(71) Applicant: **Ningde Amperex Technology Ltd.
Ningde City, Fujian 352100 (CN)**

(72) Inventors:
• **FAN, Xiaohe
Ningde City, Fujian Province, People s Republic
of
China, 352100 (CN)**
• **WEI, Zengbin
Ningde City, Fujian Province, People s Republic
of
China, 352100 (CN)**

(74) Representative: **Icosa
83 avenue Denfert-Rochereau
75014 Paris (FR)**

(54) **ELECTROCHEMICAL APPARATUS AND ELECTRONIC APPARATUS**

(57) An electrochemical apparatus includes an electrolyte, a positive electrode plate, a negative electrode plate, and a separator, where the separator is disposed between the positive electrode plate and the negative electrode plate; a width W of the electrochemical apparatus and a thickness T of the electrochemical apparatus satisfy: 80 mm ≤ W ≤ 120 mm, and 2.3 ≤ W/T ≤ 4; and an adhesion force F between the separator and the positive electrode plate is 5 N/m to 15 N/m. With the adhesion force of the separator being regulated within the foregoing ranges, the separator has high adhesive performance. The application of the separator to a wide and thin electrochemical apparatus with a width and W/T value within the foregoing ranges can mitigate the deformation problem of the wide and thin electrochemical apparatus during cycling while taking the rate performance of the wide and thin electrochemical apparatus into account.

FIG. 1

EP 4 539 181 A1

**Description**

**TECHNICAL FIELD**

This application relates to the field of electrochemical technologies, and in particular, to an electrochemical apparatus and an electronic apparatus.

**BACKGROUND**

With popularity of electronic products such as notebook computers, mobile phones, handheld game consoles, and tablet computers, requirements for electrochemical apparatuses (for example, lithium-ion batteries) are increasingly stringent. Lithium-ion batteries have been widely used in the fields such as electric energy storage, portable electronic devices, and electric vehicles, by virtue of their characteristics such as high energy density, high working voltage, low self-discharge rate, small size, and light weight. However, existing wide and thin lithium-ion batteries are prone to deformation during cycling, which can easily affect their rate performance. Therefore, how to mitigate the deformation problem of wide and thin lithium-ion batteries during cycling while taking the rate performance of the wide and thin lithium-ion batteries into account has become an urgent technical problem to be solved by persons skilled in the art.

**SUMMARY**

This application is intended to provide an electrochemical apparatus and an electronic apparatus, so as to mitigate the deformation problem of wide and thin electrochemical apparatuses during cycling while taking the rate performance of the wide and thin electrochemical apparatuses into account.

It should be noted that in the content of the invention of this application, the lithium-ion battery is used as an example of the electrochemical apparatus to explain this application. However, the electrochemical apparatus of this application is not limited to the lithium-ion battery. Specific technical solutions are as follows:

A first aspect of this application provides an electrochemical apparatus including an electrolyte, a positive electrode plate, a negative electrode plate, and a separator, where the separator is disposed between the positive electrode plate and the negative electrode plate; and the separator includes a porous substrate and a first porous layer, the first porous layer being disposed on a surface of the porous substrate close to the positive electrode plate; where a width W of the electrochemical apparatus and a thickness T of the electrochemical apparatus satisfy: $80\,\text{mm} \le W \le 120\,\text{mm}$, and $2.3 \le W/T \le 4$; the first porous layer includes primary particles, and a degree of swelling of the primary particles is 50% to 200%; and an adhesion force F between the separator and the positive electrode plate is 5 N/m to 15 N/m. With the degree of swelling of the primary particles and the adhesion force between the separator and the positive electrode plate being regulated within the foregoing ranges, the separator has high adhesive performance and an appropriate degree of swelling. When the separator is applied to a wide and thin electrochemical apparatus with a width and W/T value within the foregoing ranges, and the separator, positive electrode plate, and negative electrode plate have good infiltration performance, the overall hardness of the wide and thin electrochemical apparatus is improved, thereby mitigating the deformation problem of the wide and thin electrochemical apparatus during cycling. In addition, the electrochemical apparatus has good rate performance.

In an embodiment of this application, the adhesion force F between the separator and the positive electrode plate is 8 N/m to 12 N/m. With the adhesion force between the separator and the positive electrode plate being regulated within the foregoing ranges, the deformation problem of the wide and thin electrochemical apparatus during cycling can be further mitigated, the thickness swelling rate of the electrochemical apparatus can be further reduced, and the electrochemical apparatus has good rate performance.

In an embodiment of this application, the primary particles are polymerized from at least one of the following monomers: butadiene, methyl acrylate, butyl acrylate, methyl methacrylate, octyl methacrylate, styrene, butyl methacrylate, isooctyl acrylate, ethylene, propylene, acrylic acid, hexafluoropropylene, or vinylidene fluoride.

In an embodiment of this application, an average diameter of the primary particles is $0.2\,\mu\text{m}$ to $3\,\mu\text{m}$. With the average diameter of the primary particles being regulated within the foregoing range, the deformation problem of the wide and thin electrochemical apparatus during cycling can be mitigated, and the electrochemical apparatus has good rate performance.

In an embodiment of this application, in an area of $11.5\,\mu\text{m} \times 7.5\,\mu\text{m}$ on a surface of the first porous layer, a quantity Q of the primary particles is 30 to 80. With the quantity of the primary particles being regulated within the foregoing range, the deformation problem of the wide and thin electrochemical apparatus during cycling can be mitigated, and the electrochemical apparatus has a low thickness swelling rate and good rate performance.

In an embodiment of this application, a degree of swelling of the primary particles is 80% to 150%. With the degree of swelling of the primary particles being regulated within the foregoing range, it is conducive to further mitigate the deformation problem of the wide and thin electrochemical apparatus during cycling.

In an embodiment of this application, a thickness $T_2$ of the first porous layer is 0.5 $\mu$m to 3.1 $\mu$m, and a thickness of the separator is denoted as $T_1$, $T_1$ and $T_2$ satisfying: $0.07 \leq T_2/T_1 \leq 0.30$. With the thickness of the first porous layer and the value of $T_2/T_1$ being regulated within the foregoing ranges, it is conducive to mitigating the deformation problem of the wide and thin electrochemical apparatus during cycling, so that the electrochemical apparatus has good rate performance, a low thickness swelling rate, and a high energy density.

In an embodiment of this application, the electrolyte includes fluoroethylene carbonate; and based on a mass of the electrolyte, a mass percentage of the fluoroethylene carbonate is M%, where $3 \leq M \leq 12$. With the foregoing type of fluoroethylene carbonate being selected and the percentage of fluoroethylene carbonate in the electrolyte being regulated within the foregoing range, it is conducive to mitigating the deformation problem of the wide and thin electrochemical apparatus during cycling, so that the electrochemical apparatus has a low thickness swelling rate and good rate performance and low-temperature performance.

In an embodiment of this application, the electrolyte comprises a propionate, the propionate including at least one of ethyl propionate, propyl propionate, butyl propionate, pentyl propionate, ethyl fluoropropionate, propyl fluoropropionate, butyl fluoropropionate, or pentyl fluoropropionate; and based on a mass of the electrolyte, a mass percentage of the propionate is N%, wherein $20 \leq N \leq 60$. With the foregoing types of propionate being selected and the percentage of propionate in the electrolyte being regulated within the foregoing range, the rate performance of the wide and thin electrochemical apparatus can be further improved on a basis that the deformation problem of the wide and thin electrochemical apparatus during cycling is mitigated.

A second aspect of this application provides an electronic apparatus, where the electronic apparatus includes the electrochemical apparatus according to any one of the foregoing embodiments. Therefore, the electronic apparatus has good use performance.

This application has the following beneficial effects:

This application provides an electrochemical apparatus and an electronic apparatus. The electrochemical apparatus includes an electrolyte, a positive electrode plate, a negative electrode plate, and a separator, where the separator is disposed between the positive electrode plate and the negative electrode plate; and the separator includes a porous substrate and a first porous layer, the first porous layer being disposed on a surface of the porous substrate close to the positive electrode plate; where a width W of the electrochemical apparatus and a thickness T of the electrochemical apparatus satisfy: $80\,mm \leq W \leq 120\,mm$, and $2.3 \leq W/T \leq 4$; the first porous layer includes primary particles, and a degree of swelling of the primary particles is 50% to 200%; and an adhesion force F between the separator and the positive electrode plate is 5 N/m to 15 N/m. With the degree of swelling of the primary particles and the adhesion force of the separator being regulated within the foregoing ranges, the separator has high adhesive performance and an appropriate degree of swelling. When the separator is applied to a wide and thin electrochemical apparatus with a width and W/T value within the foregoing ranges, and the separator, positive electrode plate, and negative electrode plate have good infiltration performance, the overall hardness of the wide and thin electrochemical apparatus is improved, thereby mitigating the deformation problem of the wide and thin electrochemical apparatus during cycling, and the electrochemical apparatus has good rate performance.

Certainly, when any product or method of this application is implemented, all advantages described above are not necessarily demonstrated simultaneously.

**BRIEF DESCRIPTION OF DRAWINGS**

To describe the technical solutions in some embodiments of this application or in the prior art more clearly, the following briefly describes the accompanying drawings required for describing these embodiments or the prior art. Apparently, the accompanying drawings in the following descriptions show merely some embodiments of this application, and persons of ordinary skill in the art may still derive other embodiments from these accompanying drawings.

FIG. 1 is a schematic cross-sectional structural diagram of a separator in its own thickness direction according to an embodiment of this application;

FIG. 2 is a schematic cross-sectional structural diagram of a separator in its own thickness direction according to another embodiment of this application;

FIG. 3 is a schematic cross-sectional structural diagram of a separator in its own thickness direction according to still another embodiment of this application; and

FIG. 4 is a microscopic schematic diagram of a first porous layer in a separator of this application under scanning electron microscopy.

**DETAILED DESCRIPTIONS**

The following clearly describes the technical solutions in some embodiments of this application with reference to the accompanying drawings in some embodiments of this application. Apparently, these embodiments described are only some rather than all embodiments of this application. All other embodiments obtained by persons skilled in the art based on this application shall fall within the protection scope of this application.

It should be noted that, in specific implementations of this application, the lithium-ion battery is used as an example of the electrochemical apparatus to illustrate this application. However, the electrochemical apparatus of this application is not limited to the lithium-ion battery.

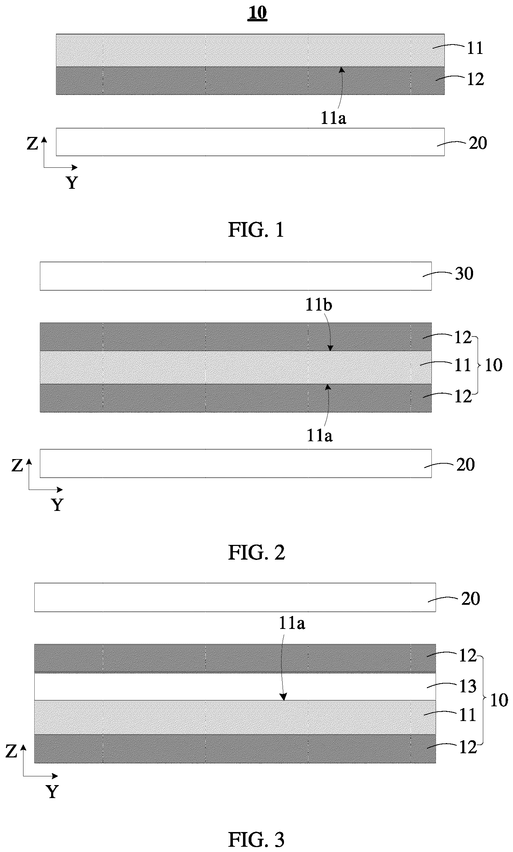

A first aspect of this application provides an electrochemical apparatus including an electrolyte, a positive electrode plate, a negative electrode plate, and a separator, where the separator is disposed between the positive electrode plate and the negative electrode plate; and the separator includes a porous substrate and a first porous layer, the first porous layer being disposed on a surface of the porous substrate close to the positive electrode plate. For ease of understanding, in this application, the length direction of the separator itself is defined as Y, and its thickness direction is defined as Z. It should be understood that the above definitions of direction are for ease of describing this application, and the directions defined in this application can be understood based on the accompanying drawings and a relative position of an actual product element. Furthermore, the length direction and thickness direction of the substrate and the first porous layer are the same as those of the separator. For example, as shown in FIG. 1, the separator 10 includes a porous substrate 11 and a first porous layer 12, the first porous layer 12 being disposed on a surface 11a of the porous substrate 11 close to a positive electrode plate 20, where a width W of the electrochemical apparatus and a thickness T of the electrochemical apparatus satisfy: $80\ mm \leq W \leq 120\ mm$, and $2.3 \leq W/T \leq 4$; the first porous layer includes primary particles, and the degree of swelling of the primary particles is 50% to 200%; and an adhesion force F between the separator and the positive electrode plate is 5 N/m to 15 N/m. For example, the width W of the electrochemical apparatus is 80 mm, 85 mm, 90 mm, 95 mm, 100 mm, 105 mm, 110 mm, 115 mm, 120 mm, or any value between any two of the foregoing values. For example, the value of W/T is 2.3, 2.8, 3.1, 3.4, 3.7, 4, or any value between any two of the foregoing values. For example, the degree of swelling of the primary particles is 50%, 80%, 110%, 140%, 170%, 200%, or any value between any two of the foregoing values. The degree of swelling of the primary particles is too small when being less than 50%, the adhesion force between the separator and the positive electrode plate is insufficient, and the storage and swelling rate performance of the electrochemical apparatus deteriorates. The degree of swelling of the primary particles is too large when being greater than 200%, and when the primary particles are applied to the separator, the separator tends to swell and thicken during use, thereby increasing the volume of the electrochemical apparatus to cause a decrease in energy density of the electrochemical apparatus and increasing the thickness swelling rate of the electrochemical apparatus. For example, the adhesion force F between the separator and the positive electrode plate is 5 N/m, 6 N/m, 7 N/m, 8 N/m, 9 N/m, 10 N/m, 11 N/m, 12 N/m, 13 N/m, 14 N/m, 15 N/m, or any value between any two of the foregoing values. The adhesion force F between the separator and the positive electrode plate is too small when being less than 5 N/m, and when the separator is applied to a wide and thin electrochemical apparatus with a width and W/T value within the foregoing ranges, the overall hardness of the wide and thin electrochemical apparatus is small, and the wide and thin electrochemical apparatus is prone to deformation during cycling. The adhesion force F between the separator and the positive electrode plate is too large when being greater than 15 N/m, and the separator adheres too tightly to the positive electrode plate and the negative electrode plate, which will hinder the infiltration of the electrolyte into the separator, positive electrode plate, and negative electrode plate, thereby affecting the kinetic performance of the wide and thin electrochemical apparatus. With the degree of swelling of the primary particles and the adhesion force of the separator being regulated within the foregoing ranges, the separator has high adhesive performance and an appropriate degree of swelling. When the separator is applied to a wide and thin electrochemical apparatus with a width and W/T value within the foregoing ranges, and the separator, positive electrode plate, and negative electrode plate have good infiltration performance, the overall hardness of the wide and thin electrochemical apparatus is improved, thereby mitigating the deformation problem of the wide and thin electrochemical apparatus during cycling. The electrochemical apparatus has a low thickness swelling rate and good rate performance.

This application has no particular limitation on the thickness T of the electrochemical apparatus, provided that the objectives of this application can be achieved. For example, the thickness T of the electrochemical apparatus is 20 mm to 48 mm.

This application has no particular limitation on the method for regulating the width W and thickness T of the electrochemical apparatus, provided that the objectives of this application can be achieved. For example, the width W of the electrochemical apparatus may be regulated by regulating the widths of the positive electrode plate, negative electrode plate, and separator; the thickness T of the electrochemical apparatus may be regulated by regulating the thickness of at least one of the positive electrode plate, negative electrode plate, or separator; or the thickness T of the electrochemical apparatus may be regulated by regulating the number of winding layers of the positive electrode plate, negative electrode plate, and separator.

This application has no particular limitation on the method for regulating the adhesion force F between the separator and the positive electrode plate, provided that the objectives of this application can be achieved. For example, such regulation may be achieved by regulating at least one of the types of compositions in the first porous layer, the percentages of the compositions in the first porous layer, or the thickness of the first porous layer.

This application has no particular limitation on the method for regulating the degree of swelling of the primary particles, provided that the objectives of this application can be achieved. For example, such regulation may be achieved by regulating the type of primary particles. In this application, the primary particle refers to a smallest unit particle without accumulation, flocculation, or other structures.

In an embodiment of this application, a degree of swelling of the primary particles is 80% to 150%. For example, the degree of swelling of the primary particles is 80%, 90%, 100%, 110%, 120%, 130%, 140%, 150%, or any value between any two of the foregoing values. With the degree of swelling of the primary particles being regulated within the foregoing range, it is conducive to further mitigate the deformation problem of the wide and thin electrochemical apparatus during cycling.

In an embodiment of this application, the adhesion force F between the separator and the positive electrode plate is 8 N/m to 12 N/m. For example, the adhesion force F between the separator and the positive electrode plate is 8 N/m, 9 N/m, 10 N/m, 11 N/m, 12 N/m, or any value between any two of the foregoing values. With the adhesion force between the separator and the positive electrode plate being regulated within the foregoing range, the separator has high adhesive performance and an appropriate degree of swelling. When the separator is applied to the wide and thin electrochemical apparatus of this application, and the separator, positive electrode plate, and negative electrode plate have good infiltration performance, the overall hardness of the wide and thin electrochemical apparatus is further improved, thereby further mitigating the deformation problem of the wide and thin electrochemical apparatus during cycling and further reducing the thickness swelling rate of the electrochemical apparatus, and the electrochemical apparatus has good rate performance.

According to an embodiment of this application, as shown in FIG. 2, the separator 10 includes a porous substrate 11 and a first porous layer 12, the first porous layer 12 being disposed on a surface 11a of the porous substrate 11 close to the positive electrode plate 20 and on a surface 11b of the porous substrate 11 close to the negative electrode plate 30, respectively. The separator with the foregoing structure has good adhesion force to the positive electrode plate and the negative electrode plate.

In an embodiment of this application, an average diameter of the primary particles is $0.2 \mu m$ to $3 \mu m$. For example, the average diameter of the primary particles is $0.2 \mu m$, $1 \mu m$, $2 \mu m$, $3 \mu m$, or any value between any two of the foregoing values. With the average diameter of the primary particles being regulated within the foregoing range, it is conducive to dispersing the primary particles uniformly in the first porous layer, so that the separator has good adhesion force, thereby mitigating the deformation problem of the wide and thin electrochemical apparatus during cycling, and the electrochemical apparatus has good rate performance.

This application has no particular limitation on the method for regulating the average diameter of the primary particles, provided that the objectives of this application can be achieved. For example, such regulation may be achieved by directly purchasing primary particles that meet the average diameter range of this application.

In an embodiment of this application, in an area of $11.5 \mu m \times 7.5 \mu m$ on a surface of the first porous layer, a quantity Q of the primary particles is 30 to 80. For example, Q is 30, 40, 50, 60, 70, 80, or any value between any two of the foregoing values. With the quantity of the primary particles being regulated within the foregoing range, the first porous layer contains a suitable quantity of primary particles, allowing for good adhesion between the separator and the positive electrode plate and for good infiltration of the electrolyte into the separator, so that the deformation problem of the wide and thin electrochemical apparatus during cycling is mitigated, and the electrochemical apparatus has a low thickness swelling rate and good rate performance.

In an embodiment of this application, the primary particles are polymerized from at least one of the following monomers: butadiene, methyl acrylate, butyl acrylate, methyl methacrylate, octyl methacrylate, styrene, butyl methacrylate, isooctyl acrylate, ethylene, propylene, acrylic acid, hexafluoropropylene, or vinylidene fluoride.

The foregoing types of primary particles have characteristics such as moderate degree of swelling and low melting point. With the foregoing types of primary particles being selected for application in the first porous layer, the separator has good adhesion force, thereby mitigating the deformation problem of the wide and thin electrochemical apparatus during cycling, and the electrochemical apparatus has good rate performance.

This application has no particular limitation on the method for regulating the quantity Q of primary particles, provided that the objectives of this application can be achieved. For example, such regulation may be achieved by regulating at least one of the coating weight of the first porous layer, the solid content of the first porous layer slurry, or the particle size of the primary particles.

In one embodiment of this application, the first porous layer further includes a wetting agent and a thickener. This application has no particular limitation on the wetting agent and the thickener, provided that the objectives of this application can be achieved. For example, the wetting agent includes but is not limited to at least one of dimethylsilane, sulfonates, or fatty alcohol sulfates. The thickener includes but is not limited to at least one of sodium carboxymethylcellulose or lithium carboxymethylcellulose. This application has no particular limitation on the type of sulfonate, provided that the objectives of this application can be achieved. For example, the sulfonates include but are not limited to at least one of sodium alkylbenzenesulfonate or olefin sulfonates. This application has no particular limitation on the type of fatty alcohol sulfate, provided that the objectives of this application can be achieved. For example, the fatty alcohol sulfates include but are not limited to sodium dodecyl sulfate. This application has no particular limitation on the percentages of the wetting agent and the thickener, provided that the objectives of this application can be achieved. For example, based on a mass of the first porous layer, a mass percentage of the primary particles is 93% to 100%, a mass percentage of the wetting agent is 0% to 5%, and a mass percentage of the thickener is 0% to 2%.

In an embodiment of this application, a thickness $T_2$ of the first porous layer is 0.5 $\mu$m to 3.1 $\mu$m, and a thickness of the separator is denoted as $T_1$, $T_1$ and $T_2$ satisfying: $0.07 \leq T_2/T_1 \leq 0.30$. For example, the thickness $T_2$ of the first porous layer is 0.5 $\mu$m, 1.1 $\mu$m, 2.1 $\mu$m, 3.1 $\mu$m, or any value between any two of the foregoing values. For example, $T_2/T_1$ is 0.07, 0.1, 0.15, 0.20, 0.25, 0.30, or any value between any two of the foregoing values. With the thickness of the first porous layer and the value of $T_2/T_1$ being regulated within the foregoing ranges, the separator with good adhesion force can reduce the risk of decreased volumetric energy density of the electrochemical apparatus due to excessive thickness, thereby mitigating the deformation problem of the wide and thin electrochemical apparatus during cycling, so that the electrochemical apparatus has good rate performance, a low thickness swelling rate, and a high energy density.

This application has no particular limitation on the thickness $T_1$ of the separator, provided that the objectives of this application can be achieved. For example, the thickness $T_1$ of the separator is 3 $\mu$m to 10 $\mu$m.

In an embodiment of this application, the electrolyte includes fluoroethylene carbonate; and based on a mass of the electrolyte, a mass percentage of the fluoroethylene carbonate is M%, where $3 \leq M \leq 12$. For example, M is 3, 4, 5, 6, 7, 8, 9, 10, 11, 12, or any value between any two of the foregoing values. The addition of fluoroethylene carbonate to the electrolyte is conducive to forming a solid electrolyte interphase (SEI) with a dense structure layer but without increasing impedance. This can reduce further decomposition of the electrolyte and improve the low-temperature performance of the electrolyte. With the percentage of fluoroethylene carbonate in the electrolyte being regulated within the foregoing range, it is conducive to mitigating the deformation problem of the wide and thin electrochemical apparatus during cycling, so that the electrochemical apparatus has a low thickness swelling rate and good rate performance and low-temperature performance.

In an embodiment of this application, the electrolyte includes a propionate, the propionate including at least one of ethyl propionate, propyl propionate, butyl propionate, pentyl propionate, ethyl fluoropropionate, propyl fluoropropionate, butyl fluoropropionate, or pentyl fluoropropionate; and based on a mass of the electrolyte, a mass percentage of the propionate is N%, where $20 \leq N \leq 60$. For example, N is 20, 30, 40, 50, 60, or any value between any two of the foregoing values. The foregoing types of propionate have the advantages of low viscosity and good fluidity. With the foregoing types of propionate being selected and the percentage of propionate in the electrolyte being regulated within the foregoing range, the electrolyte has good infiltration performance. The application of the electrolyte to the wide and thin electrochemical apparatus of this application can mitigate the deformation problem of the wide and thin electrochemical apparatus during cycling, further improve the infiltration capability of the electrolyte to the separator, positive electrode plate, and negative electrode plate, and increase the speed of deintercalation and intercalation of lithium ions, thereby further improving the rate performance of the wide and thin electrochemical apparatus.

In an embodiment of this application, as shown in FIG. 3, the separator 10 further includes a heat-resistant layer 13, the heat-resistant layer 13 being disposed on the surface 11a of the porous substrate 11 close to the positive electrode plate 20 and between the porous substrate 11 and the first porous layer 12. The heat-resistant layer includes inorganic particles and a binder. The inorganic particles include at least one of alumina, boehmite, titanium dioxide, silica, zirconium dioxide, tin dioxide, magnesium hydroxide, magnesium oxide, zinc oxide, barium sulfate, boron nitride, or aluminum nitride. The binder includes at least one of acrylic acid, methyl methacrylate, butyl acrylate, octyl acrylate, isooctyl acrylate, butadiene, or acrylonitrile; and based on a mass of the heat-resistant layer, a mass percentage of the inorganic particles is 85% to 95%, and a mass percentage of the binder is 5% to 15%. For example, the mass percentage of the inorganic particles is 85%, 86%, 87%, 88%, 89%, 90%, 91%, 92%, 93%, 94%, 95%, or any value between any two of the foregoing values. For example, the mass percentage of the binder is 5%, 6%, 7%, 8%, 9%, 10%, 11%, 12%, 13%, 14%, 15%, or any value between any two of the foregoing values. During cycling or internal short circuit of the electrochemical apparatus, a higher temperature tends to occur first at the connection of the positive electrode tab. With the provision of a heat-resistant layer in the separator, where the heat-resistant layer is disposed on a surface of the porous substrate close to the positive electrode plate and between the porous substrate and the first porous layer, and with the percentages of inorganic particles and binders in the heat-resistant layer being regulated within the foregoing ranges, when the electrochemical apparatus is in a high temperature state (temperature $\geq$ 130°C) and the protective adhesive of the positive electrode tab melts, the heat-resistant layer can protect the positive electrode tab from extensive contact with the negative electrode plate, reducing the risk of enlarging the internal short-circuit area of the electrochemical apparatus. In this way, the wide and thin electrochemical device improves its thermal safety performance on the basis of the mitigated deformation problem during cycling.

In an embodiment of this application, the heat-resistant layer further includes a wetting agent. This application has no particular limitation on the percentages of the wetting agent, provided that the objectives of this application can be achieved. For example, based on a mass of the heat-resistant layer, a mass percentage of the wetting agent is 0% to 5%.

In an embodiment of this application, D50 of the inorganic particles is 0.4 $\mu$m to 2 $\mu$m, and D90 is 0.8 $\mu$m to 3 $\mu$m. For example, D50 of the inorganic particles is 0.4 $\mu$m, 0.6 $\mu$m, 0.8 $\mu$m, 1 $\mu$m, 1.2 $\mu$m, 1.4 $\mu$m, 1.6 $\mu$m, 1.8 $\mu$m, 2 $\mu$m, or any value between any two of the foregoing values. For example, D90 of the inorganic particles is 0.8 $\mu$m, 1 $\mu$m, 1.2 $\mu$m, 1.4 $\mu$m, 1.6 $\mu$m, 1.8 $\mu$m, 2 $\mu$m, 2.2 $\mu$m, 2.4 $\mu$m, 2.6 $\mu$m, 2.8 $\mu$m, 3 $\mu$m, or any value between any two of the foregoing values. With D50 and D90 of the inorganic particles being regulated within the foregoing ranges, the risk of inorganic particles agglomerating in the heat-resistant layer is low, and the heat-resistant layer exhibits heat-resistant performance while its thickness can be controlled within a suitable range. This is conducive to enabling the wide and thin electrochemical apparatus to have good thermal safety performance on the basis of good kinetic performance.

In this application, "D50" represents a particle size of the inorganic particles at a cumulative volume of 50% in a volume-based particle size distribution as measured by starting from small particle sizes. "D90" represents a particle size of the inorganic particles at a cumulative volume of 90% in a volume-based particle size distribution as measured by starting from small particle sizes.

This application has no particular limitation on the thickness of the heat-resistant layer, provided that the objectives of this application can be achieved. For example, the thickness of the heat-resistant layer is 0.5 $\mu$m to 3 $\mu$m.

In an embodiment of this application, the electrolyte further includes a non-aqueous organic solvent and a lithium salt. This application has no particular limitation on the types and percentages of the non-aqueous organic solvent and the lithium salt, provided that the objectives of this application can be achieved. For example, based on a mass of the electrolyte, a mass percentage of the non-aqueous organic solvent is 20% to 67%, and a mass percentage of the lithium salt is 10% to 15%. For example, the non-aqueous organic solvent includes but is not limited to at least one of cyclic carbonates or linear carbonates. The cyclic carbonates include but are not limited to at least one of ethylene carbonate, propylene carbonate (PC for short), or vinyl ethylene carbonate (VEC), and the linear carbonates include but are not limited to at least one of dimethyl carbonate (DMC), ethyl methyl carbonate (EMC), diethyl carbonate (DEC), methyl propyl carbonate (MPC), dioctyl carbonate, dipentyl carbonate, ethyl isobutyl carbonate, isopropyl methyl carbonate, di-n-butyl carbonate, diisopropyl carbonate, or propyl carbonate. For example, the lithium salt may include at least one of $LiPF_6$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, or $Li_2SiF_6$.

This application has no particular limitation on the porous substrate of the separator, and persons skilled in the art can choose according to actual needs, provided that the objectives of this application can be achieved. For example, the material of the porous substrate may include but is not limited to at least one of polyethylene (PE), polypropylene (PP), or polyethylene terephthalate (PET). The structure of the porous substrate may be a single-layer structure or a multi-layer structure. For example, the multi-layer may be two layers, three layers, or four layers. A thickness of the porous substrate may be 3 $\mu$m to 20 $\mu$m. A porosity of the porous substrate may be 20% to 50%. A pore size of the porous substrate may be 30 nm to 50 nm.

This application has no particular limitation on the positive electrode plate, provided that the objectives of this application can be achieved. For example, the positive electrode plate includes a positive electrode current collector and a positive electrode active material layer. This application has no particular limitation on the positive electrode current collector, provided that the objectives of this application can be achieved. For example, the positive electrode current collector may include aluminum foil, aluminum alloy foil, a composite current collector, or the like. The positive electrode active material layer in this application includes a positive electrode active material. This application has no particular limitation on the type of the positive electrode active material, provided that the objectives of this application can be achieved. For example, the positive electrode active material may include at least one of lithium nickel cobalt manganate, lithium nickel cobalt aluminate, lithium iron phosphate, lithium-rich manganese-based materials, lithium cobaltate, lithium manganate, lithium iron manganese phosphate, or lithium titanate. In this application, the positive electrode active material may further include a non-metal element. For example, the non-metal element includes at least one of fluorine, phosphorus, boron, chlorine, silicon, or sulfur. These elements can further improve stability of the positive electrode active material. This application has no particular limitation on the thicknesses of the positive electrode current collector and positive electrode active material layer, provided that the objectives of this application can be achieved. For example, the thickness of the positive electrode current collector is 5 $\mu$m to 20 $\mu$m, and preferably 6 $\mu$m to 18 $\mu$m. A thickness of a one-sided positive electrode active material layer is 30 $\mu$m to 120 $\mu$m. In this application, the positive electrode active material layer may be disposed on one or two surfaces of the positive electrode current collector in thickness direction. Optionally, the positive electrode active material layer may further include a positive electrode conductive agent and a positive electrode binder. This application has no particular limitation on the types of the positive electrode conductive agent and positive electrode binder in the positive electrode active material layer, provided that the objectives of this application can be achieved. This application has no particular limitation on the mass ratio of the positive electrode active material, positive electrode conductive agent, and positive electrode binder in the positive electrode active material layer, and persons skilled in the art can choose according to actual needs, provided that the objectives of this application can be achieved. For example, the mass ratio of the positive electrode active material, positive electrode conductive agent, and positive electrode binder in the positive electrode active material layer is (97.5 to 97.9):(0.8 to 1.7):(1.0 to 2.0).

This application has no particular limitation on the negative electrode plate, provided that the objectives of this application can be achieved. For example, the negative electrode plate includes a negative electrode current collector and a negative electrode active material layer. This application has no particular limitation on the negative electrode current collector, provided that the objectives of this application can be achieved. For example, the negative electrode current collector may include copper foil, copper alloy foil, nickel foil, stainless steel foil, titanium foil, nickel foam, copper foam, or the like. The negative electrode active material layer of this application includes a negative electrode active material. This application has no particular limitation on the type of the negative electrode active material, provided that the objectives of this application can be achieved. For example, the negative electrode active material may include at least one of natural graphite, artificial graphite, mesocarbon microbead (MCMB), hard carbon, soft carbon, silicon, silicon-carbon composite, $SiO_x$ (0 < x < 2), Li-Sn alloy, Li-Sn-O alloy, Sn, SnO, SnO2, spinel-structure lithium titanate $Li_4Ti_5O_{12}$, Li-Al alloy, or lithium metal. This application has no particular limitation on the thicknesses of the negative electrode current collector and negative electrode active material layer, provided that the objectives of this application can be achieved. For example, the thickness of the negative electrode current collector is 6 $\mu$m to 10 $\mu$m, and the thickness of the negative electrode active material layer is 30 $\mu$m to 130 $\mu$m. Optionally, the negative electrode active material layer may further include at least one of a negative electrode conductive agent, a thickener, or a negative electrode binder. This application has no particular limitation on the types of the negative electrode conductive agent, thickener, and negative electrode binder in the negative electrode active material layer, provided that the objectives of this application can be achieved. This application has no particular limitation on the mass ratio of the negative electrode active material, negative electrode conductive agent, thickener, and negative electrode binder in the negative electrode active material layer, provided that the objectives of this application can be achieved. For example, the mass ratio of the negative electrode active material, negative electrode conductive agent, thickener, and negative electrode binder in the negative electrode active material layer is (97 to 98):(0.5 to 1.5):(0 to 1.5):(1.0 to 1.9).

This application has no particular limitation on the method for preparing a separator, provided that the objectives of this application can be achieved.

For example, in an embodiment, the method for preparing a separator may include but is not limited to the following steps: (1) mixing primary particles, a wetting agent, and a thickener well to obtain a first porous layer slurry with a solid content of 4 wt% to 15 wt%; and (2) applying the first porous layer slurry to a surface of a porous substrate close to a positive electrode plate, followed by drying to form a first porous layer. A separator is thus produced.

For example, in an embodiment, the method for preparing a separator may include but is not limited to the following steps: (1) mixing primary particles, a wetting agent, and a thickener well to obtain a first porous layer slurry with a solid content of 4 wt% to 15 wt%; and (2) applying the first porous layer slurry to two surfaces of a porous substrate, followed by drying to form a first porous layer. A separator is thus produced.

For example, in yet another embodiment, the method for preparing a separator may include but is not limited to the following steps: (1) mixing inorganic particles and a binder well to obtain a heat-resistant layer slurry with a solid content of 30 wt% to 50 wt%; (2) applying the heat-resistant layer slurry to a surface of a porous substrate close to a positive electrode plate, followed by drying to form a heat-resistant layer; (3) mixing primary particles, a wetting agent, and a thickener well to obtain a first porous layer slurry with a solid content of 4 wt% to 15 wt%; and (4) applying the first porous layer slurry to a surface of the heat-resistant layer away from the porous substrate and to a surface of the porous substrate away from the positive electrode plate, respectively, followed by drying to form the first porous layer. A separator is thus produced.

This application has no particular limitation on the type of the electrochemical apparatus, which may include any apparatus in which electrochemical reactions occur. For example, the electrochemical apparatus may include but is not limited to a lithium metal secondary battery, a lithium-ion secondary battery (lithium-ion battery), a sodium-ion secondary battery (sodium-ion battery), a lithium polymer secondary battery, or a lithium-ion polymer secondary battery.

This application has no particular limitation on the method for preparing an electrochemical apparatus, and a preparation method well-known in the art can be selected, provided that the objectives of this application can be achieved. For example, the method for preparing an electrochemical apparatus includes but is not limited to the following steps: stacking a positive electrode plate, a separator, and a negative electrode plate in sequence, performing operations such as winding and folding on the stack as needed to obtain an electrode assembly with a wound structure, placing the electrode assembly into a packaging bag, injecting an electrolyte into the packaging bag and sealing the packaging bag to obtain an electrochemical apparatus; or stacking a positive electrode plate, a separator, and a negative electrode plate in sequence, fixing four corners of an entire stacked structure to obtain an electrode assembly with a stacked structure, placing the electrode assembly into a packaging bag, injecting an electrolyte into the packaging bag and sealing the packaging bag to obtain an electrochemical apparatus.

A second aspect of this application provides an electronic apparatus, where the electronic apparatus includes the electrochemical apparatus according to any one of the foregoing embodiments. Therefore, the electronic apparatus has good use performance.

The electronic apparatus of this application is not particularly limited, and the electronic apparatus may be any known electronic apparatus used in the prior art. For example, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a storage card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

**Examples**

In the following, examples and comparative examples are given to describe some embodiments of this application in more detail. Various tests and evaluations are performed in the following methods.

**Test method and device**

**Testing of width W of electrochemical apparatus**

An image projector was used to test the width of lithium-ion batteries. A prepared lithium-ion battery was placed between two transparent glass plates, with the length direction of the lithium-ion battery parallel to the width direction of the glass plates and the width direction of the lithium-ion battery parallel to the length direction of the glass plates. The length of the glass plates was at least 100% greater than the width of the lithium-ion battery, and the width of the glass plates was at least 10% greater than the length of the lithium-ion battery. Two 30 kg clips were used at places in the length direction of the glass plates and without covering the lithium-ion battery, to clamp the lithium-ion battery. Then, the lithium-ion battery was placed flat on the measurement table of the image projector. The image projector was used to measure the width of the lithium-ion battery, where the width was measured at five positions in the length direction, and an average value was taken as the width W of the lithium-ion battery.

**Testing of thickness T of electrochemical apparatus**

The testing pressure was adjusted to the requirement of thickness measurement of 700 g by adding or removing weights.
A 3 mm gauge block was placed on a sample stage, and upon activation of white buttons at two sides, the PPG cell thickness gauge automatically advanced the gauge block to a measurement position and test the gauge block. Any 9 points were tested in sequence. A calibration tolerance of $\pm0.02$ mm was applied. The gauge was deemed fit for use only if all measurement results were within this tolerance.
The lithium-ion battery was held with one hand, with the barcode facing upwards. The lithium-ion battery was placed on the sample stage for the barcode to be scanned first. Subsequently, upon activation of the white buttons at two sides, the gauge automatically advanced the battery into the measurement position and conducted the thickness test. The resultant measurement, representing the thickness T of the lithium-ion battery, was recorded.

**Testing of adhesion force F between separator and positive electrode plate**

The lithium-ion battery was discharged to 3 V, its packaging bag was removed and electrode assembly was taken out. The negative electrode plate was peeled off from the electrode assembly, and the interface between the positive electrode plate and the separator remained. The positive electrode plate and the separator were cut into small strips of 15 mm $\times$ 40 mm, and the adhesion force was tested at room temperature (25°C) according to standard No. "GBT2792-1998" for peel strength at 180° angle.

**Testing of average diameter of primary particles**

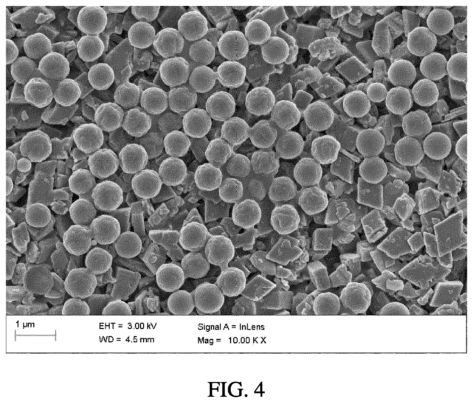

As shown in FIG. 4, a SEM at a magnification of 10000X was used to measure the maximum lengths of primary particles from left to right within an area of 11.5 $\mu$m $\times$ 7.5 $\mu$m. The measurement was performed continuously for 16 primary particles, and the average value of these 16 measurements was taken as the average diameter of the primary particles.

**Testing of degree of swelling of primary particles**

(1) Preparation of adhesive film

The lithium-ion battery was discharged to 3.0 V at a constant current of 0.5C, then disassembled to take out the separator. The separator was cut into samples of length × width of 10 cm × 4 cm, and a sample was placed in the organic solvent N-methyl-2-pyrrolidone (NMP). The first porous layer was dispersed into the NMP to obtain a suspension, the ratio of the solvent to the solution was 1:9, and the suspension could not be more than 1/3 of the capacity of the beaker.

The beaker containing the suspension was placed on the disperser for stirring at an initial speed of 500 rpm for 30 minutes. After the first porous layer powder initially dissolved, the stirring speed was increased to 1500 rpm, and stirring was performed thoroughly for 1 hour.

The stirred solution was left standing for 30 minutes to eliminate bubbles.

The solution was filtered using a 100-mesh screen to remove insoluble impurities and the porous substrate.

This solution was poured into an adhesive film preparation mold and removed any bubbles in advance. The mold was placed in an oven and baked at 60°C for 12 hours. After baking, the appearance and hardness of the adhesive film were observed. If the mold was not completely dried, baking continued until the mold was completely dried.

(2) Swelling test

The prepared adhesive film was cut into small strips of about 2 g each using scissors. Three parallel samples were prepared for each type of adhesive film.

Each adhesive film strip was weighed individually, with the initial weight being recorded as M1, then placed in a vial, and a sample name was labeled. A test electrolyte was added, exceeding the adhesive film by 3 cm. Then the vial was sealed and placed in an oven for baking at 60°C for 24 hours.

The adhesive film was removed and wiped clean with a dust-free cloth, and the weight of each adhesive film, M2, was recorded.

Degree of swelling (%) = (M2 - M1)/M1 × 100%. The average value of the 3 parallel samples was taken as the final degree of swelling data.

The test electrolyte mentioned above was the same as the electrolyte in Example 1-1.

**Testing of mass percentages of fluoroethylene carbonate and propionate**

The lithium-ion battery was discharged to 3.0 V at a constant current of 0.5C, and its packaging bag was cut open. Then, the cut-open lithium-ion battery was placed into a centrifuge tube with the opening facing down. The electrolyte was obtained by centrifugation on a centrifuge, and the electrolyte obtained was tested using pyrolysis gas chromatography mass spectrometry (Py-GCMS) to obtain the mass percentage of fluoroethylene carbonate, the components of propionate, and the mass percentages of the components, in the electrolyte.

**Testing of D50 and D90 of inorganic particles**

D50 and D90 were measured with reference to the national standard GBIT 19077-2016 (Particle Size Distribution - Laser Diffraction Method) and using a laser particle size analyzer (such as Malvern Master Size 3000).

**Testing of rate performance**

(1) The lithium-ion battery was placed in a 25°C environment;
(2) The battery was left standing for 5 minutes;
(3) The battery was charged at a constant current of 0.5C to 4.47 V, then charged at a constant voltage of 4.47 V to 0.05C;
(4) The battery was left standing for 5 minutes;
(5) The battery was discharged at a rate of XX to 3.0 V; where the discharge rate XX = {0.2C, 0.5C, 1C, 1.5C, 2C};
(6) Steps 2 to 5 were repeated, where all rates were tested in turn according to rate conditions; and
(7) The battery was left standing for 5 minutes.

The rate performance is based on the capacity at 0.2C. The rate performance of the lithium-ion batteries in the examples and comparative examples of this application is characterized by the rate performance measured at a discharge rate of XX = 2C, where 2C rate performance = 2C capacity/0.2C capacity $\times$ 100%.

## Testing of swelling rate

(1) The battery was left standing at a temperature of 25°C for 5 minutes, then the initial thickness of the battery was measured;
(2) The battery was charged to 4.5 V at a constant current of 0.5C, and charged at a constant voltage of 4.5 V to 0.02C;
(3) The battery was left standing for 5min.
(4) The battery was stored at 80°C for 42 hours, with a storage voltage of 4.5 V and a state of charge (SOC) of 100%;
(5) The thickness of the battery after storage at 80°C for 42 hours was measured.

Swelling rate (%) = (thickness measured after cooling for 42 hours - initial thickness) / initial thickness $\times$ 100%.

The instrument used for measuring the thickness is the PPG battery thickness tester, with a testing pressure of 500 g. Measurement after cooling refers to a measurement after the lithium-ion battery was placed at room temperature for 24 hours to allow the battery temperature to drop to a room temperature of 25°C.

The swelling rate characterizes whether the deformation problem of the electrochemical apparatus during cycling is mitigated. A smaller swelling rate indicates more significant mitigation in the deformation problem of the electrochemical apparatus during cycling.

## Testing of low-temperature performance

1) The battery was placed at a temperature of 25°C;
(2) The battery was left standing for 30 minutes.
(3) The battery was discharged to 3.0 V at 0.2C;
(4) The battery was left standing for 5 minutes;
(5) The battery was charged at a constant current of 1.9C to 4.5 V, then charged at a constant voltage of 4.5 V to 0.02C;
(6) The battery was left standing for 5 minutes;
(7) The furnace temperature was adjusted to {25, 10, 0, -10, -20, 55, 60}°C;
(8) The battery was left standing for 60 minutes;
(9) The battery was discharged to 3.0 V at 0.2C;
(10) The furnace temperature was adjusted to 25°C;
(11) The battery was left standing for 60 minutes; and
(12) Steps (5) to (11) were repeated, where the capacity at each corresponding temperature condition was tested according to temperature conditions; and

$$\text{Low-temperature performance (\%)} = \text{capacity at } -20°C/\text{capacity at } 25°C \times 100\%.$$

A higher low-temperature performance value indicates better low-temperature performance of the lithium-ion battery.

## Example 1-1

<Preparation of separator>

A PE with a thickness of 5 $\mu$m was selected as the porous substrate, and the porosity of the porous substrate was 36%.

Primary particles of styrene-isobutyl acrylate copolymer (a weight average molecular weight was 20W, and a mass ratio of styrene monomer to isobutyl acrylate monomer was 90:10) and 5% wetting agent were mixed well to form a first porous layer slurry with a solid content of 5 wt%; where the average diameter of the primary particles was 1 $\mu$m.

Inorganic particles of boehmite and binder methyl acrylate were mixed, added with deionized water as a solvent, and stirred well to form a heat-resistant layer slurry with a solid content of 40wt%.

The heat-resistant layer slurry was applied on a surface of the porous substrate close to the positive electrode plate and dried at 50°C to form a heat-resistant layer. The first porous layer slurry was applied on a surface of the heat-resistant layer away from the porous substrate and dried at 45°C to form a separator with the first porous layer and the heat-resistant layer on one side. The first porous layer slurry was applied on a surface of the porous substrate away from the positive electrode plate and dried at 45°C. A separator was thus produced.

The inorganic particles had D50 of 1 $\mu$m and D90 of 1.5 $\mu$m. Based on a mass of the heat-resistant layer, a mass percentage of the inorganic particles $W_1$ was 95%, a mass percentage of the binder $W_2$ was 5%, a mass percentage of the dispersant $W_3$ was 0%, and a mass percentage of the wetting agent $W_4$ was 0%; and a thickness of the heat-resistant layer C was 2 $\mu$m. Based on a mass of the first porous layer, a mass percentage of the primary particles $W_{j1}$ was 95%, and a mass percentage of the wetting agent $W_r$ was 5%. A thickness of the first porous layer was 1.2 $\mu$m, and a coating weight of the first porous layer was 2 mg/5000 mm$^2$. Specifications of the separator were width $\times$ length = 78 mm $\times$ 875 mm.

<Preparation of positive electrode plate>

Positive electrode active material LiCoO$_2$, positive electrode conductive agent conductive carbon black (Super P), and positive electrode binder PVDF were mixed at a mass ratio of 97.5:1:1.5, added with N-methyl-2-pyrrolidone (NMP) as a solvent, and stirred under an action of a vacuum mixer to form a positive electrode slurry with a solid content of 75 wt% and a uniform system. The positive electrode slurry was uniformly applied on one surface of a positive electrode current collector aluminum foil with a thickness of 10 $\mu$m and dried at 85°C, to obtain a positive electrode plate with a single-sided positive electrode active material layer (thickness of 50 $\mu$m). The foregoing steps were repeated on the other surface of the aluminum foil to obtain a positive electrode plate coated with the positive electrode active material layer on two surfaces. Then, the positive electrode plate was cold-pressed, cut, and welded with a positive electrode tab to obtain a positive electrode plate with specifications of width $\times$ length = 74 mm $\times$ 851 mm for later use.

<Preparation of negative electrode plate>

Negative electrode active material graphite, negative electrode conductive agent Super P, thickener carboxymethyl cellulose, and binder styrene-butadiene rubber (SBR) were mixed at a mass ratio of 97.5:1:0.5:1, added with deionized water as a solvent, and stirred under an action of a vacuum mixer to form a negative electrode slurry with a solid content of 50 wt% and a uniform system. The negative electrode slurry was uniformly applied on one surface of a negative electrode current collector copper foil with a thickness of 8 $\mu$m and dried at 85°C, to obtain a negative electrode plate with a single-sided negative electrode active material layer (thickness of 60 $\mu$m). The foregoing steps were repeated on the other surface of the copper foil to obtain a negative electrode plate coated with the negative electrode active material layer on two surfaces. Then, the negative electrode plate was cold-pressed, cut, and welded with a negative electrode tab to obtain a negative electrode plate with specifications of width $\times$ length = 76 mm $\times$ 867 mm for later use.

<Preparation of electrolyte>

In an environment with a water content of less than 10 ppm, non-aqueous organic solvents ethylene carbonate (EC) and ethyl methyl carbonate (EMC) were mixed well at a mass ratio of 1:1 to form a base solvent, then additives vinylene carbonate and 1,3-propane sultone were added to the base solvent, and then lithium salt LiPF$_6$ was added, dissolved and mixed well to form an electrolyte. Based on a mass of the electrolyte, a mass percentage of vinylene carbonate was 1%, a mass percentage of 1,3-propane sultone was 3%, a mass percentage of LiPF$_6$ was 12.5%, and the balance was non-aqueous organic solvent.

<Preparation of lithium-ion battery>

The prepared negative electrode plate, separator, and positive electrode plate were stacked and wound in sequence to obtain a wound electrode assembly structure. The electrode assembly was placed into an aluminum-plastic film packaging bag and dried, and then the electrolyte was injected, followed by processes such as vacuum sealing, standing, formation, capacity grading, degassing, and trimming, to obtain a lithium-ion battery. The lithium-ion battery had a width W of 100 mm and a thickness T of 35 mm.

**Examples 1-2 to 1-7**

These examples were the same as Example 1-1 except that the type of primary particles was adjusted according to Table 1.

### Examples 1-8 to 1-14

These examples were the same as Example 1-3 except that the related preparation parameters were adjusted according to Table 2.

Change of the thickness T of the lithium-ion battery can be achieved by adjusting the number of winding layers of the positive electrode plate, separator, and negative electrode plate.

### Examples 2-1 to 2-8

These examples were the same as Example 1-3 except that the related preparation parameters were adjusted according to Table 2.

### Example 3-1

The example was the same as Example 1-3 except that fluoroethylene carbonate with a percentage of M = 6% was further added in <Preparation of electrolyte>.

After fluoroethylene carbonate was added, the mass percentage of $LiPF_6$ remained unchanged, the mass percentage of the non-aqueous organic solvent changed accordingly, the mass ratio of EC and EMC remained unchanged, and a total mass percentage of the non-aqueous organic solvent, additives, $LiPF_6$, and fluoroethylene carbonate was 100%.

### Example 3-2

The example was the same as Example 1-3 except that fluoroethylene carbonate with a percentage of M = 3% and propyl propionate with a percentage of N = 40% in <Preparation of electrolyte>.

After fluoroethylene carbonate and propionate were added, the mass percentage of $LiPF_6$ remained unchanged, the mass percentage of the non-aqueous organic solvent changed accordingly, the mass ratio of EC and EMC remained unchanged, and a total mass percentage of the non-aqueous organic solvent, additives, $LiPF_6$, fluoroethylene carbonate, and propionate was 100%.

### Examples 3-3 to 3-8

These examples were the same as Example 3-2 except that the related preparation parameters were adjusted according to Table 3.

When the mass percentage N of propionate and the mass percentage M of fluoroethylene carbonate changed, the mass percentage of $LiPF_6$ remained unchanged, the mass percentage of the non-aqueous organic solvent changed accordingly, the mass ratio of EC and EMC remained unchanged, and a total mass percentage of the non-aqueous organic solvent, additives, $LiPF_6$, fluoroethylene carbonate, and propionate was 100%.

### Comparative examples 1 to 7

These comparative examples were the same as Example 1-3 except that the related preparation parameters were adjusted according to Table 1,

The preparation parameters and performance parameters of examples and comparative examples are shown in Table 1 and Table 3.

**Table 1**

| | W (mm) | T (mm) | W/T | Primary particles | F (N/m) | Degree of swelling (%) | Rate performance (%) | Swelling rate (%) |
|---|---|---|---|---|---|---|---|---|
| Example 1-1 | 100 | 35 | 2.9 | Styrene-isobutyl acrylate copolymer ($N_1$=90:10) | 7.5 | 50 | 92.3 | 28.9 |

(continued)

| | W (mm) | T (mm) | W/T | Primary particles | F (N/m) | Degree of swelling (%) | Rate performance (%) | Swelling rate (%) |
|---|---|---|---|---|---|---|---|---|
| Example 1-2 | 100 | 35 | 2.9 | Styrene-isobutyl acrylate copolymer ($N_1$=85:15) | 8.5 | 80 | 91.6 | 27.8 |
| Example 1-3 | 100 | 35 | 2.9 | Styrene-isobutyl acrylate copolymer ($N_1$=80:20) | 9.7 | 110 | 90.5 | 25.6 |
| Example 1-4 | 100 | 35 | 2.9 | Styrene-isobutyl acrylate copolymer ($N_1$=75:25) | 11.1 | 150 | 89.8 | 20.3 |
| Example 1-5 | 100 | 35 | 2.9 | Styrene-isobutyl acrylate copolymer ($N_1$=70:30) | 12.4 | 200 | 89.3 | 20.6 |
| Example 1-6 | 100 | 35 | 2.9 | Styrene-butadiene copolymer ($N_2$=80:20) | 6 | 95 | 91.0 | 29.1 |
| Example 1-7 | 100 | 35 | 2.9 | Styrene-butadiene copolymer ($N_2$=60:40) | 15 | 240 | 88.1 | 25.4 |
| Example 1-8 | 80 | 35 | 2.3 | Styrene-isobutyl acrylate copolymer ($N_1$=80:20) | 9.7 | 110 | 91.4 | 28.9 |
| Example 1-9 | 90 | 35 | 2.6 | Styrene-isobutyl acrylate copolymer ($N_1$=80:20) | 9.7 | 110 | 91.1 | 29.2 |
| Example 1-10 | 110 | 35 | 3.1 | Styrene-isobutyl acrylate copolymer ($N_1$=80:20) | 9.7 | 110 | 90.2 | 28.9 |
| Example 1-11 | 120 | 35 | 3.4 | Styrene-isobutyl acrylate copolymer ($N_1$=80:20) | 9.7 | 110 | 89.7 | 29.1 |
| Example 1-12 | 100 | 25 | 4.0 | Styrene-isobutyl acrylate copolymer ($N_1$=80:20) | 9.7 | 110 | 91.6 | 28.9 |
| Example 1-13 | 100 | 30 | 3.3 | Styrene-isobutyl acrylate copolymer ($N_1$=80:20) | 9.7 | 110 | 91.1 | 28.8 |
| Example 1-14 | 100 | 40 | 2.5 | Styrene-isobutyl acrylate copolymer ($N_1$=80:20) | 9.7 | 110 | 89.8 | 29.1 |
| Comparative example 1 | 100 | 50 | 2 | Styrene-isobutyl acrylate copolymer ($N_1$=70:20) | 9.7 | 110 | 89.7 | 35.3 |
| Comparative example 2 | 100 | 20 | 5 | Styrene-isobutyl acrylate copolymer ($N_1$=70:20) | 9.7 | 110 | 91.3 | 35.8 |
| Comparative example 3 | 100 | 35 | 2.9 | Polyvinylidene fluoride | 3 | 30 | 93.5 | 45.2 |

(continued)

|  | W (mm) | T (mm) | W/T | Primary particles | F (N/m) | Degree of swelling (%) | Rate performance (%) | Swelling rate (%) |
|---|---|---|---|---|---|---|---|---|
| Comparative example 4 | 100 | 35 | 2.9 | Polyvinylidene fluoride-polymethyl methacrylate (60:40) | 17 | 320 | 88.2 | 34.2 |
| Comparative example 5 | 100 | 35 | 2.9 | Styrene-isobutyl acrylate copolymer ($N_1$=95:5) | 9.7 | 40 | 92.8 | 40.3 |
| Comparative example 6 | 100 | 35 | 2.9 | Styrene-isobutyl acrylate copolymer ($N_1$=65:35) | 9.7 | 210 | 88.7 | 32.1 |
| Comparative example 7 | 100 | 35 | 2.9 | Polyvinylidene fluoride-hexafluoropropylene ($N_3$=99:1) | 3 | 40 | 93.2 | 44.3 |

Note: The weight average molecular weights of the styrene-butadiene copolymer in Examples 1-6 and 1-7 were 50W and 70W, respectively; the weight average molecular weights of the styrene-isobutyl acrylate copolymer in Examples 1-1 to 1-5, Comparative examples 5 and 6 were 32W, 27W, 21W, 15W, 10W, 35W, and 18W, respectively; the weight average molecular weight of polyvinylidene fluoride in Comparative example 3 was 75W; the weight average molecular weight of polymethyl methacrylate in Comparative example 4 was 35W; the weight average molecular weight of polyvinylidene fluoride-hexafluoropropylene in Comparative example 7 was 80W; "$N_1$" in Table 1 represents the mass ratio of styrene monomer and isobutyl acrylate monomer in the styrene-isobutyl acrylate copolymer; "$N_2$" in Table 1 represents the mass ratio of styrene monomer and butadiene monomer in the styrene-butadiene copolymer; and "$N_3$" in Table 1 represents the mass ratio of vinylidene fluoride monomer and hexafluoropropylene monomer in polyvinylidene fluoride-hexafluoropropylene.

It can be seen from Examples 1-1 to 1-14 and Comparative examples 1 to 7 that when the adhesion force F between the separator and the positive electrode plate in the examples of this application is within the range of this application, and the degree of swelling of the primary particles is within the range of this application, the application of the separator to the wide and thin lithium-ion battery with a width W and W/T value within the range of this application reduces the swelling rate, indicating that the deformation problem of the wide and thin lithium-ion battery during cycling is mitigated. Moreover, the application of the separator to the wide and thin lithium-ion battery with a width W and W/T value within the ranges of this application also provides the wide and thin lithium-ion battery with good rate performance. Whereas, in the lithium-ion batteries of the comparative examples, when at least one of the width W and W/T, the adhesion force F between the separator and the positive electrode plate, or the degree of swelling of the primary particles is not within the ranges of this application, the lithium-ion batteries have higher swelling rates, indicating that the deformation problem of the lithium-ion batteries during cycling is not mitigated.

The adhesion force F between the separator and the positive electrode plate and the degree of swelling of the primary particles usually affect the deformation and rate performance of the wide and thin lithium-ion battery during cycling. It can be seen from Examples 1-1 to 1-7 and Comparative examples 3 to 7 that the wide and thin lithium-ion battery with the adhesion force F between the separator and the positive electrode plate and the degree of swelling of the primary particles within the ranges of this application has a lower swelling rate and higher rate performance, indicating that the deformation problem of the wide and thin lithium-ion battery during cycling is mitigated and that the battery has higher rate performance.

The width W and the value of W/T of the lithium-ion battery usually affect the deformation and rate performance of the wide and thin lithium-ion battery during cycling. It can be seen from Example 1-3, Examples 1-8 to 1-14, Comparative example 1, and Comparative example 2 that the wide and thin lithium-ion battery with the width W and the value of W/T of the lithium-ion battery within the ranges of this application has a lower swelling rate and higher rate performance, indicating that the deformation problem of the wide and thin lithium-ion battery during cycling is mitigated and that the battery has higher rate performance.

**Table 2**

| | Average diameter of primary particles ($\mu$m) | Quantity Q of primary particles (number) | Thickness $T_2$ of first porous layer ($\mu$m) | Thickness $T_1$ of separator ($\mu$m) | $T_2/T_1$ | F (N/m) | Degree of swelling (%) | Rate performance (%) | Swelling rate (%) |
|---|---|---|---|---|---|---|---|---|---|
| Example 1-3 | 1 | 40 | 1.2 | 9.4 | 0.13 | 9.7 | 110 | 90.5 | 25.6 |
| Example 2-1 | 0.6 | 40 | 0.6 | 8.2 | 0.07 | 10.5 | 110 | 89.3 | 23.2 |
| Example 2-2 | 2 | 25 | 2.3 | 11.6 | 0.20 | 9.2 | 110 | 91.5 | 27.1 |
| Example 2-3 | 3 | 12 | 3.1 | 13.2 | 0.23 | 8.6 | 110 | 92.4 | 27.7 |
| Example 2-4 | 1 | 20 | 1.2 | 9.4 | 0.13 | 9.7 | 110 | 92.5 | 26.7 |
| Example 2-5 | 1 | 30 | 1.2 | 9.4 | 0.13 | 9.7 | 110 | 91.8 | 26.1 |
| Example 2-6 | 1 | 50 | 1.2 | 9.4 | 0.13 | 9.7 | 110 | 89.2 | 23.8 |
| Example 2-7 | 1 | 60 | 1.2 | 9.4 | 0.13 | 9.7 | 110 | 88.1 | 22.3 |
| Example 2-8 | 1 | 80 | 1.2 | 9.4 | 0.13 | 9.7 | 110 | 90.1 | 24.2 |

The diameter of the primary particles, the thickness $T_2$ of the first porous layer, and the value of $T_2/T_1$ usually affect the deformation and rate performance of the wide and thin lithium-ion battery during cycling. It can be seen from Example 1-3 and Examples 2-1 to 2-3 that the wide and thin lithium-ion battery with the diameter of the primary particles, the thickness $T_2$ of the first porous layer, and the value of $T_2/T_1$ within the ranges of this application has a lower swelling rate and higher rate performance, indicating that the deformation problem of the wide and thin lithium-ion battery during cycling is mitigated and that the battery has higher rate performance.

The quantity Q of primary particles in the first porous layer usually affects the deformation and rate performance of the wide and thin lithium-ion battery during cycling. It can be seen from Example 1-3 and Examples 2-4 to 2-8 that the wide and thin lithium-ion battery with the quantity Q of primary particles in the first porous layer within the range of this application has a lower swelling rate and higher rate performance, indicating that the deformation problem of the wide and thin lithium-ion battery during cycling is mitigated and that the battery has higher rate performance.

**Table 3**

| | Percentage M of fluoroethylene carbonate (%) | Propionate | N (%) | Rate performance (%) | Swelling rate (%) | Low-temperature performance (%) |
|---|---|---|---|---|---|---|
| Example 1-3 | \ | \ | \ | 90.5 | 25.6 | 81.2 |
| Example 3-1 | 6 | \ | \ | 90.4 | 23.3 | 82.7 |
| Example 3-2 | 3 | Propyl propionate | 40 | 91.1 | 25.6 | 81.5 |
| Example 3-3 | 6 | Propyl propionate | 40 | 90.5 | 23.2 | 82.6 |
| Example 3-4 | 9 | Propyl propionate | 40 | 89.8 | 22.3 | 83.1 |
| Example 3-5 | 12 | Propyl propionate | 40 | 89.3 | 21.1 | 83.4 |
| Example 3-6 | 6 | Propyl propionate | 20 | 91.2 | 24.1 | 82.4 |

(continued)

| | Percentage M of fluoroethylene carbonate (%) | Propionate | N (%) | Rate performance (%) | Swelling rate (%) | Low-temperature performance (%) |
|---|---|---|---|---|---|---|
| Examples 3 to -7 | 6 | Propyl propionate | 60 | 89.6 | 20.3 | 81.5 |
| Example 3-8 | 6 | Ethyl propionate | 40 | 90.7 | 23.5 | 82.4 |
| Note: "\" in Table 3 indicates that there is no corresponding preparation parameter. | | | | | | |

It can be seen from Example 1-3 and Example 3-1 that further addition of fluoroethylene carbonate to the electrolyte can improve the low-temperature performance of the wide and thin lithium-ion battery while mitigating the deformation problem during cycling. It can be seen from Example 3-1 and Example 3-3 that further addition of propionate to the electrolyte can further improve the rate performance of the wide and thin lithium-ion battery while mitigating the deformation problem during cycling.

The mass percentage of fluoroethylene carbonate in the electrolyte usually affects the deformation, rate performance, and low-temperature performance of the wide and thin lithium-ion battery during cycling. It can be seen from Examples 3-2 to 3-5 that the wide and thin lithium-ion battery with the mass percentage of ethylene carbonate in the electrolyte within the range of this application has good rate performance and low-temperature performance while mitigating the deformation problem during cycling.

The mass percentage of propionate in the electrolyte usually affects the deformation and rate performance and low-temperature performance of the wide and thin lithium-ion battery during cycling. It can be seen from Example 1-3, Example 3-3, Example 3-6, and Example 3-7 that the wide and thin lithium-ion battery with the mass percentage of propionate in the electrolyte within the range of this application has good rate performance and low-temperature performance while mitigating the deformation problem during cycling.

The type of propionate usually affects the deformation and rate performance and low-temperature performance of the wide and thin lithium-ion battery during cycling. It can be seen from Example 3-3 and Example 3-8 that the wide and thin lithium-ion battery with the type of propionate within the range of this application has good rate performance and low-temperature performance while mitigating the deformation problem during cycling.

It should be noted that relational terms such as "first" and "second" herein are only used to distinguish one entity or operation from another entity or operation, and do not necessarily require or imply that there is any such actual relationship or order between these entities or operations. In addition, the terms "comprise", "include", or any other variations thereof are intended to cover non-exclusive inclusions, such that a process, method, article or device including a series of elements not only includes these elements, but also includes other elements which are not expressly listed, or further includes elements which are inherent to such process, method, article or device.

All embodiments in this specification are described in a related manner. For a part that is the same or similar between some embodiments, reference may be made between some embodiments. Each embodiment focuses on differences from other embodiments.

The foregoing descriptions are merely preferred embodiments of this application, and are not intended to limit this application. Any modifications, equivalent replacements, improvements, and the like made without departing from the spirit and principle of this application shall fall within the protection scope of this application.

**Claims**

1. An electrochemical apparatus, comprising: an electrolyte, a positive electrode plate, a negative electrode plate, and a separator; **characterized in that**, the separator is disposed between the positive electrode plate and the negative electrode plate; and the separator comprises a porous substrate and a first porous layer, the first porous layer being disposed on a surface of the porous substrate towards the positive electrode plate; wherein

   a width W of the electrochemical apparatus and a thickness T of the electrochemical apparatus satisfy: $80 \, mm \leq W \leq 120 \, mm$, and $2.3 \leq W/T \leq 4$;
   the first porous layer comprises primary particles, and a degree of swelling of the primary particles is 50% to 200%; and
   an adhesion force F between the separator and the positive electrode plate is 5 N/m to 15 N/m.

2. The electrochemical apparatus according to claim 1, **characterized in that**, the adhesion force F between the separator and the positive electrode plate is from 8 N/m to 12 N/m.

3. The electrochemical apparatus according to claim 1, **characterized in that**, the primary particles are polymerized from at least one of the following monomers: butadiene, methyl acrylate, butyl acrylate, methyl methacrylate, octyl methacrylate, styrene, butyl methacrylate, isooctyl acrylate, ethylene, propylene, acrylic acid, hexafluoropropylene, or vinylidene fluoride.

4. The electrochemical apparatus according to claim 1, **characterized in that**, an average diameter of the primary particles is 0.2 $\mu$m to 3 $\mu$m.

5. The electrochemical apparatus according to claim 1, **characterized in that**, in an area of 11.5 $\mu$m $\times$ 7.5 $\mu$m on a surface of the first porous layer, a quantity Q of the primary particles is 30 to 80.

6. The electrochemical apparatus according to claim 1, **characterized in that**, the degree of swelling of the primary particles is 80% to 150%.

7. The electrochemical apparatus according to claim 1, **characterized in that**, a thickness $T_2$ of the first porous layer is 0.5 $\mu$m to 3.1 $\mu$m, and a thickness of the separator is denoted as $T_1$, and $0.07 \leq T_2/T_1 \leq 0.30$.

8. The electrochemical apparatus according to claim 1, **characterized in that**, the electrolyte comprises fluoroethylene carbonate; and
   based on a mass of the electrolyte, a mass percentage of the fluoroethylene carbonate is M%, wherein $3 \leq M \leq 12$.

9. The electrochemical apparatus according to claim 1, **characterized in that**, the electrolyte comprises a propionate; the propionate comprising at least one of ethyl propionate, propyl propionate, butyl propionate, pentyl propionate, ethyl fluoropropionate, propyl fluoropropionate, butyl fluoropropionate, or pentyl fluoropropionate; and
   based on a mass of the electrolyte, a mass percentage of the propionate is N%, wherein $20 \leq N \leq 60$.

10. The electrochemical apparatus according to claim 1, **characterized in that**, the primary particles comprises styrene-isobutyl acrylate copolymer, a mass ratio of styrene monomer and isobutyl acrylate monomer in the styrene-isobutyl acrylate copolymer is in a range of 70:30 to 90:10.

11. An electronic apparatus, wherein the electronic apparatus comprises an electrochemical apparatus, the electrochemical apparatus comprises an electrolyte, a positive electrode plate, a negative electrode plate, and a separator; **characterized in that**, the separator is disposed between the positive electrode plate and the negative electrode plate; and the separator comprises a porous substrate and a first porous layer, the first porous layer being disposed on a surface of the porous substrate towards the positive electrode plate; wherein

    a width W of the electrochemical apparatus and a thickness T of the electrochemical apparatus satisfy: 80 mm $\leq$ W $\leq$ 120 mm, and $2.3 \leq W/T \leq 4$;
    the first porous layer comprises primary particles, and a degree of swelling of the primary particles is 50% to 200%; and
    an adhesion force F between the separator and the positive electrode plate is 5 N/m to 15 N/m.

12. The electronic apparatus according to claim 11, **characterized in that**, the adhesion force F between the separator and the positive electrode plate is from 8 N/m to 12 N/m.

13. The electronic apparatus according to claim 11, **characterized in that**, the primary particles are polymerized from at least one of the following monomers: butadiene, methyl acrylate, butyl acrylate, methyl methacrylate, octyl methacrylate, styrene, butyl methacrylate, isooctyl acrylate, ethylene, propylene, acrylic acid, hexafluoropropylene, or vinylidene fluoride.

14. The electronic apparatus according to claim 11, **characterized in that**, an average diameter of the primary particles is 0.2 $\mu$m to 3 $\mu$m.

15. The electronic apparatus according to claim 11, **characterized in that**, the electronic apparatus comprises the electrochemical apparatus according to any one of claims 5-10.

**10**

FIG. 1

FIG. 2

FIG. 3

1 µm EHT = 3.00 kV Signal A = InLens
WD = 4.5 mm Mag = 10.00 K X

FIG. 4

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 114 114 A (NINGDE AMPEREX TECHNOLOGY LTD) 12 May 2023 (2023-05-12) * see passages in US family member * & US 2025/023197 A1 (XIAO WENWU [CN] ET AL) 16 January 2025 (2025-01-16) * paragraphs [0017], [0029], [0053] - [0057], [0062], [0072] - [0076]; claims 1, 7; figures 1, 2; examples 1-4, 1-5; tables 1-1, 1-2, 5 *<br>- - - - - | 1-15 | INV. H01M10/04 H01M50/414 H01M50/449 H01M50/457 H01M50/46 H01M50/42 |

TECHNICAL FIELDS
SEARCHED    (IPC)

H01M

The present search report has been drawn up for all claims

| Place of search | Date of completion of the search | Examiner |
|---|---|---|
| Munich | 13 February 2025 | Dunn, Halina |

EPO FORM 1503 03.82 (P04C01)

## ANNEX TO THE EUROPEAN SEARCH REPORT
## ON EUROPEAN PATENT APPLICATION NO.

EP 24 20 6123

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | Publication date | Patent family member(s) | | Publication date |
|---|---|---|---|---|
| CN 116114114      A | 12-05-2023 | CN | 116114114 A | 12-05-2023 |
| | | EP | 4503312 A1 | 05-02-2025 |
| | | US | 2025023197 A1 | 16-01-2025 |
| | | WO | 2023184432 A1 | 05-10-2023 |

EPO FORM P0459

For more details about this annex : see Official Journal of the European Patent Office, No. 12/82